(19) Europäisches Patentamt
European Patent Office
Office européen des brevets

(11) Publication number: **0 143 127**
**B1**

# (12) EUROPEAN PATENT SPECIFICATION

(45) Date of publication of patent specification: **02.03.88**

(51) Int. Cl.$^4$: **C 08 G 73/10**, C 09 J 3/16, B 32 B 7/00

(21) Application number: **83307240.8**

(22) Date of filing: **28.11.83**

(54) **Modified polyimides; production thereof, bonding therewith and production of composite articles therefrom.**

(43) Date of publication of application:
**05.06.85 Bulletin 85/23**

(45) Publication of the grant of the patent:
**02.03.88 Bulletin 88/09**

(84) Designated Contracting States:
**AT BE CH DE FR GB IT LI LU NL SE**

(56) References cited:
**EP-A-0 049 393**
**US-A-3 310 506**
**US-A-4 094 864**
**US-A-4 183 839**
**US-A-4 407 980**

(73) Proprietor: **Gagliani, John**
**6280 Lance Place**
**San Diego California 92120 (US)**
(73) Proprietor: **Long, John V.**
**1756 E. Lexington Avenue**
**El Cajon California 92121 (US)**

(72) Inventor: **Gagliani, John**
**6280 Lance Place**
**San Diego California 92120 (US)**
Inventor: **Long, John V.**
**1756 E. Lexington Avenue**
**El Cajon California 92121 (US)**

(74) Representative: **Austin, Hedley William et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention is concerned with a method of making polyimide forming resins which are suitable for use as adhesives and coatings and as matrix materials for composite structures.

U.S. Patent 4183839 describes polyimide forming coating and adhesive compositions which are made by first preparing a suitable bisimide by reacting a tetracarboxylic acid dianhydride with a lactam or its amino acid equivalent. The ratio of lactam:dianhydride is preferably in the range 2,3:1 to 2,7:1 and the imidization reaction is preferably carried out at a temperature of from 170 to 200°C for a period of from 20 to 60 minutes.

The polyimide forming composition is prepared by dissolving the bisimide in an inert solvent, then adding a suitable diamine to produce a viscous liquid containing an intimate, unpolymerized mixture of N,N'-disubstituted aromatic bisimide dicarboxylic acid and diamine which can be converted on heating to a high molecular weight polymer by an exchange reaction.

The composition may be coated on to a surface and polymerized by heating at a temperature of form 177 to 316°C for a period of from 30 minutes to 5 hours. The following is typical of the exchange reaction which occurs on heating:

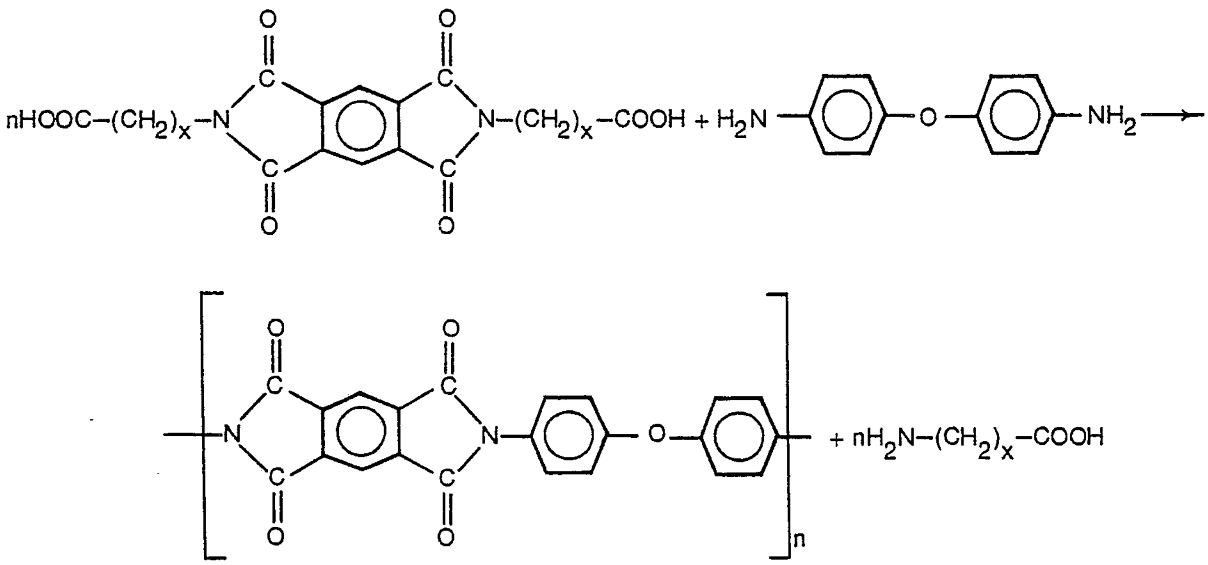

where n and x are integers.

The resulting coating is tough, highly adherent to a variety of surfaces, and has very few pinholes or bubbles. It can be used as a coating or as an adhesive, has excellent peel strength, and is resistant to high temperatures and abrasion.

We have now found that an improved polyimide forming composition can be produced by reacting a suitable aromatic dianhydride and an aliphatic dianhydride with a suitable lactam to produce a monoimide, esterifying the reaction product in a suitable solvent, and adding a suitable diamine and any desired additives.

Alternatively, the aromatic dianhydride only may initially be reacted with the lactam and the resulting monoimide esterified; the aliphatic dianhydride is then added to the esterification mixture and esterification continued.

The resulting composition is coated on to a surface or on to at least one of two surfaces to be bonded together; in the latter case, the two surfaces are then brought into pressure contact. The resin is then cured at a temperature of from 200 to 320°C for a period of from 10 to 240 minutes to polymerise the resin to a polyimide. A tough but flexible coating is obtained or, when using the resin as an adhesive, an elastic bond between the two surfaces having a shear strength of about 3000 psi ($2.07 \times 10^4$kPa).

According to the present invention, therefore, there is provided a method of making a polyimide forming resin, which comprises

(a) mixing a lactam, an aromatic dianhydride, and an aliphatic dianhydride, the mole ratio of lactam:aromatic dianhydride being in the range 0.01:1 to 3:1, to form N-substituted monoimides,

(b) mixing the product of step (a) with an esterifying solvent and heating the resulting mixture to form an esterified N-substituted monoimide, and

(c) mixing a diamine with the product of step (b) to give a composition which forms a polyimide on heating.

The invention also includes a method in which the aliphatic dianhydride is omitted from step (a) and is added after step (b), the resulting mixture being further heated before step (c).

Any suitable aromatic and aliphatic dianhydrides may be used to prepare the resins of the present invention. Typical dianhydrides include those described in U.S. Patents 3,282,897 and 3,310,506. Due to their ready availability at reasonable prices and the excellent adhesives which are obtained, the preferred aromatic dianhydrides are pyromellitic dianhydride and 3,3',4,4'-benzophenone tetracarboxylic acid dianhydride (BTDA) and the preferred aliphatic dianhydride is 1,2,3,4-butanetetracarboxylic acid dianhydride (BTCD).

Any suitable lactam may be reacted with the selected dianhydrides to produce the desired imide. Preferably, the lactam has the formula:

$$\overline{CH_2—(CH_2)_x—NHCO}$$

where x is from 1 to 5. Of these, the best results are obtained with caprolactam (x = 4).

While any suitable reaction conditions may be used, excellent results have been obtained when the dianhydrides are added to the lactam, the resulting mixture is heated to a temperature of from 150 to 200°C until the condensation reaction is complete (in about 5 to 90 minutes), then the esterifying solvent is added. In another preferred method, the aromatic dianhydride, aliphatic dianhydride, lactam and esterifying solvent are mixed together in any order, then heated or refluxed in order to complete the condensation and esterification reactions.

According to the present invention, the molar ratio of lactam:aromatic dianhydride is in the range 0.01:1 to 3:1. The best adhesives are obtained when the molar ratio of lactam:aromatic dianhydride/aliphatic dianhydride is about 1:1. Using this ratio, the resulting resin exhibits shear strength values of ≥3000 psi ($2.07 \times 10^4$kPa) when used to bond titanium to titanium. Suitable compositions are obtained when the molar ratio of lactam:dianhydride is about 1:2. Excellent coatings are obtained when the molar ratio of lactam:dianhydrides is about 1:2.3.

Any suitable esterifying solvent may be used. Typical of these are aliphatic alcohols containing up to 6 carbon atoms, aromatic alcohols, which may have halogen or amino substituents, and mixtures of two or more thereof. Best results have been obtained with methyl alcohol.

The esterification may be carried out under any suitable conditions. Typically, a mole ratio of imide:esterifying solvent of from 1:8 to 1:15 is preferred to ensure rapid esterification of the imide at reflux temperature.

When esterification is complete, the selected diamine or diamines is added to the solution. Preferably, an approximately stoichiometric quantity of diamine to dianhydrides is used.

Any suitable diamines may be used. Typical aromatic diamines include, for example, methylene dianiline, m-phenylene diamine, p-phenylene diamine, 4,4'-diaminodiphenyl sulphone, 3,3'-diaminodiphenyl sulphone, 4,4'-diaminodiphenyl ether, 3,3'-diaminodiphenyl methane, and mixtures of two or more thereof. Of these, the best results are obtained using methylene dianiline and/or 4,4'-diaminodiphenyl ether. Suitable aliphatic diamines include for example, 1,3-diaminopropane, 1,4-diaminobutane, 1,6-diaminohexane, 1,8-diaminooctane, 1,12-diaminododecane, and mixtures of two or more thereof.

Additives to improve various characteristics of the final adhesive may be added as desired. Any suitable additives may be used, such as fillers, and surfactants. Typical surfactants include Dow Corning Corp. 190 or 193, FC430 from Minnesota Mining and Manufacturing Co., and Zonyl FSC from E. I. Du Pont de Nemours & Co. (Dow Corning 190 and 193, FC430 and Zonyl FSC are Trade Marks). Any suitable concentrations may be used, but from 0.01 to 2% by weight (based on the weight of the solution prior to drying) is preferred. Of these surfactants, best results have been obtained with FC430. Suitable fillers and reinforcing additives include, for example, carbon and graphite powders, Teflon fluorocarbon powders (Teflon is a Trade Mark), metal powders, and mixtures of two or more thereof. In addition, other materials may be added to the resin, such as adhesion promoters, colorants, ultraviolet absorbers, and the like.

Macroballoons having diameters of from 0.1 to 10 mm may be mixed into the resin in any desired quantity. Small quantities thicken the resin, while relatively large quantities result in a stable material suitable for the manufacture of lightweight, strong, flame-resistant structures. Suitable macroballoon compositions include, for example, ceramics, metals and synthetic resins.

If desired, the composition may be partially dried prior to application. The solution may be coated on to one or both of the surfaces to be bonded, then partially dried to a tacky state to remove the solvents prior to bringing the surfaces together and curing the resin.

The resin of the invention may be used to coat or bond any suitable surface or surfaces by any suitable means. Strong adhesive bonds are formed, for example, between aluminium/aluminium, steel/steel, titanium/titanium, and any combination thereof. Glass and many ceramics may also be adhesively bonded. Any suitable coating technique may be used to apply the adhesive, such as spray, roller or brush coating.

The polymerization reaction is not fully understood. It appears to be a combined condensation and exchange reaction which produces a polyimide. To bond substrates together, the resin is cured by heat under pressure. Preferably, a pressure of from 2 to 5 psig (13.8 to 34.5 kPa) is applied during at least the early stages of curing. Typically, temperatures of from 230 to 320°C are used over periods of from 30 to 240

minutes. Best bonding results are obtained by initially curing at a pressure of about 5 psig (34.5 kPa) for a period of from 10 to 60 minutes at a temperature of about 230°C, followed by removal of the pressure and curing for a further 60 to 320 minutes at a temperature of about 230°C. For use as a coating, the resin is preferably sprayed on to the surface of the substrate; the solvents are then evaporated at a temperature of from 90 to 120°C, followed by curing at a temperature of from 200 to 315°C for a period of from 10 to 60 minutes.

The resin of the invention may also be used to impregnate woven or matted high strength fibre fabrics, such as glass, graphite, aramid or boron fibre fabrics. Preferably, the fabrics are first impregnated with the resin, which is then dried sufficiently to drive off residual solvent. The tacky fabric sheets are then stacked in the desired arrangement and shape, a pressure of form 20 to 100 psig (137.9 to 689.5 kPa) is supplied and the sheets are heated at a temperature of from 230 to 320°C for a period of from 30 to 120 minutes to cure the resin. A well-consolidated composite structure is obtained.

For a better understanding of the invention, the following examples are given by way of illustration.

Example 1

241.6 g (0.75 moles) of 3,3′,4,4′-benzophenonetetracarboxylic acid dianhydride and 84.8 g (0.75 moles) of caprolactam were placed in a 3 litre flask, heated to a temperature of about 175°C, and maintained at that temperature for a period of about 30 minutes. The mixture was then cooled to about 70°C and 450 g of methanol and 40 g of water were added. 148 g 1,2,3,4-butanetetracarboxylic acid dianhydride (0.75 moles) were added to the mixture and the mixture was refluxed at about 65°C until clear (in about 60 minutes). The mixture was then cooled to just below 55°C and 297 g of 4,4′-diaminodiphenylmethane (1.5 moles) were added. The mixture was then heated at about 60°C for about 15 minutes. 8.0 g of Zonyl FSC fluorocarbon surfactant was added and the mixture was mixed for about 15 minutes. The resin at this stage had a solids content of about 60%. The resin was brushed on to one surface of each of two aluminium plates and was dried in an air circulating oven at a temperature of about 93°C for about one hour. The coated surfaces were then brought together in a press and a pressure of about 5 psig (34.7 kPa) was applied. The temperature was increased to about 232°C and this temperature was maintained for about one hour. The resulting plates were found to be very securely bonded together. The lap shear strength value of the aluminium to aluminium bond was about 3500 psi ($24.12 \times 10^3$ kPa).

Example 2

The procedure of Example 1 was repeated with four additional samples using various quantities of caprolactam. Whereas Example 1 used 84.8 g (0.75 moles) of caprolactam to give a molar ratio of caprolactam: BDTA of about 1:1, the four additional samples used the following quantities of caprolactam: (a) 21.2 g (0.19 moles, 0.25 : 1 ratio), (b) 42.4 g (0.375 moles, 0.5 : 1 ratio), (c) 127.2 g (1.125 moles, 1.25 : 1 ratio), and (d) 169.6 g (1.5 moles, 2 : 1 ratio). The characteristics of the resulting adhesives were excellent overall for tests (a) and (b). The adhesives of (c) and (d) had high flexibility, but poorer high temperature resistance. This demonstrated that for best results the ratio of lactam : aromatic dianhydride should be in the range 0.5 : 1 to 1.25 : 1.

Example 3

The procedure of Example 1 was repeated, except that the following diamines were used in place of 4,4′-diaminodiphenyl methane: (a) *m*-phenylenediamine (1.5 moles), (b) 4,4′-diaminodiphenyl sulphone (1.5 moles), (c) *p*-phenylene diamine (1.5 moles), and (d) 4,4′-diaminodiphenylether (0.75 moles), and 4,4′-diaminodiphenyl sulphide (0.75 moles). In each case, the resulting adhesive had excellent bonding characteristics, with some variation in properties among the sub-examples.

Example 4

The procedure of Example 1 was repeated with the only change being the substitution of the following lactam(s) for the caprolactam (0.75 moles) used in Example 1: (a) 2-pyrrolidone (0.75 moles), (b) 2-piperidone (0.75 moles), and (c) caprolactam (0.375 moles) and 2-piperidone (0.375 moles). The resin obtained in each case was excellent, with slight changes in physical properties according to the nature of the lactam.

Example 5

An adhesive was prepared by the method described in Example 1. The following agents were added to samples of about 80 g of the adhesive: (a) about 50 g of glass microballoons having diameters of about 0.1 mm and about 110 g of ethyl alcohol, (b) about 40 g of polyimide macroballoons and about 100 g of ethyl alcohol, and (c) about 60 g of finely divided aluminium powder and about 100 g of ethyl alcohol. Each of the samples was mixed and poured into an open mould. The solvent was then evaporated by heating at a temperature of about 93°C for about one hour, then the resin was cured at about 235°C for about one hour. Samples (a) and (b) consolidated into syntactic foams having densities of about 240 kg/$m^3$ and 65.6 kg/$m^3$ respectively with the macroballoons well bonded together. Sample (c) consolidated into a solid, dense block. All three products were strong and flame-resistant.

### Example 6

241.6 g (0.75 moles) of 3,3′,4,4′-benzophenonetetracarboxylic acid dianhydride (BTDA), 84.8 g (0.75 moles) of caprolactam, and 148.6 g (0.75 moles) of 1,2,3,4-butanetetracarboxylic acid dianhydride (BTCD) were placed in a three litre flask to which 450 g of methanol was then added. The mixture was then refluxed (at about 65°C) until clear (in about 60 minutes). 297.0 g (1.5 moles) of 4,4′-diaminodiphenylmethane and 8 g of Zonyl FSC surfactant were then added and mixed. The mixture was heated at a temperature of about 65°C for about 10 minutes to dissolve the diamine, then the mixture was coated on to two aluminium plate surfaces and further dried for about 30 minutes at a temperature of about 90°C. The plates were brought together under a pressure of about 4 psig (27.6 kPa) and heated to a temperature of about 230°C for about one hour, then removed from the press and part-cured for about 3 hours at about 230°C. The resulting plates had a lap shear strength value of about $24 \times 10^6$ kPa.

### Example 7

The experiment of Example 6 was repeated with the quantities of BDTA and BTCD varied as follows: (a) 80.5 g (0.25 moles) of BTDA and 445.8 g (2.25 moles) of BTCD, (b) 161 g (0.50 moles) of BDTA and 225.4 g (1.125 moles) of BTCD, (c) 362.4 g (1.125 moles) of BDTA and 99.0 g (0.5 moles) of BTCD, and (d) 724.8 g (2.25 moles) of BDTA and 49.5 g (0.25 moles) of BTCD. In each case, a good adhesive was obtained. Best results were obtained with approximately equimolar quantities of BDTA and BTCD. Increasing the proportion of BDTA tended to cause stiffness of the adhesive, while increasing the proportion of BTCD caused lower thermal stability of the final coating.

### Example 8

Samples of the adhesive of Example 6 were prepared up to the first drying step. These adhesives were then used to thoroughly impregnate fabric swatches as follows: (a) a tow of high-strength graphite fibres, available from Union Carbide under the "Thornel" trade mark, were dipped in the resin and then placed in a mould, (b) five sheets of woven glass fabric cloth were soaked in the resin and then stacked in a press mould, (c) two sheets of woven Kevlar aramid fibre from DuPont (Kevlar is a Trade Mark) and a sheet of glass fibre mat were soaked in the resin and then placed in a mould with the mat between the fabric sheets. In each case, the solvent was first evaporated by heating the mould to a temperature of about 90°C for about one hour, then the resin was cured by heating at about 220°C for about four hours under a pressure of about 3 psig (20.7 kPa). In each case, a high strength, well consolidated and bonded composite structure was obtained.

## Claims

1. A method of making a polyimide forming resin, which comprises

(a) mixing a lactam, an aromatic dianhydride, and an aliphatic dianhydride, the mole ratio of lactam: aromatic dianhydride being in the range 0.01 : 1 to 3 : 1, to form N-substituted monoimides,

(b) mixing the product of step (a) with an esterifying solvent and heating the resulting mixture to form an esterified N-substituted monoimide, and

(c) mixing a diamine with the product of step (b) to give a composition which forms a polyimide on heating.

2. A method according to claim 1, in which the aliphatic dianhydride is omitted from step (a) and is added after step (b), the resulting mixture being further heated before step (c).

3. A method according to claim 1 or 2, in which the esterifying solvent is an alcohol containing from 1 to 6 carbon atoms.

4. A method according to any of claims 1 to 3, in which the aromatic dianhydride is 3,3′,4,4′-benzophenone tetracarboxylic acid dianhydride and/or pyromellitic dianhydride.

5. A method according to any of claims 1 to 4, in which the aliphatic dianhydride is 1,2,3,4-butanetetracarboxylic acid dianhydride.

6. A method according to any of claims 1 to 5, in which the lactam has the formula:

$$H_2C-(CH_2)_x-NHC=0$$

where x is from 1 to 5.

7. A method according to claim 6, in which the lactam is caprolactam ($x = 4$).

8. A method according to any of claims 1 to 7, in which the mole ratio of aromatic dianhydride : aliphatic dianhydride : lactam : alcohol is 0.1 to 3.0 : 0.1 to 3.0 : 1.0 : 10 to 20.

9. A method according to any of claims 1 to 8, in which the mole ratio of aromatic dianhydride : aliphatic dianhydride : lactam is about 1 : 1 : 1.

10. A method according to any of claims 1 to 9, in which the mole ratio of dianhydrides : diamine is about 1 :1.

11. A method according to any of claims 1 to 10, in which the diamine is methylene dianiline and/or 4,4′-diaminodiphenyl ether.

12. A method according to any of claims 1 to 11, which comprises the additional step of adding from 0.01 to 2% by weight of a surfactant to the composition from step (c).

13. A method of bonding together two surfaces, which comprises applying a polyimide forming resin made by the method according to any of claims 1 to 12, to at least one of the surfaces, pressing the two surfaces together under a pressure of from 2 to 5 psig (13.8 to 34.5 kPa) at a temperature of from 230 to 320°C for a period of from 10 to 60 minutes and holding the surfaces together for a further period of from 60 to 320 minutes, with or without continued pressure to bond the two surfaces together.

14. A method according to claim 13, in which the polyimide forming resin is partially dried before or after its application to at least one of the surfaces.

15. A method according to claim 13 or 14, in which at least one of the surfaces is a high strength porous sheet of woven or matted fibres which is fully impregnated with the polyimide forming resin.

16. A method of making a composite structure, which comprises mixing metal, ceramic, or synthetic resin macroballoons having an average diameter of from 0.1 to 10 mm with a polyimide forming resin made by the method according to any of claims 1 to 11, heating the mixture at a temperature of from 60 to 100°C for a period of from 30 to 240 minutes to evaporate most of the solvent, and curing the mixture at a temperature of from 230 to 320°C to give the composite structure.

17. A method of making a composite structure, which comprises impregnating at least two porous sheets of woven or matted fibres with a polyimide forming resin made by the method according to any of claims 1 to 12, placing the impregnated sheets in a mould, and applying a pressure of from 20 to 100 psig (137.9 to 689.5 kPa) at a temperature of from 230 to 320°C for a period of from 30 to 120 minutes to give a composite structure.

18. A method of forming a coating on the surface of a substrate, in which a polyimide forming resin made by the method according to any of claims 1 to 12 is applied to the surface of a substrate and the coated substrate is heated to form an adherent coating.

**Patentansprüche**

1. Verfahren zur Herstellung eines polyimidbildenden Harzes, bei dem

(a) ein Lactam, ein aromatisches Dianhydrid und ein aliphatisches Dianhydrid gemischt werden, wobei das Molverhältnis von Lactam : aromatisches Dianhydrid im Bereich von 0,01 : 1 bis 3 : 1 liegt, zur Bildung von N-substituierten Monoimiden,

(b) das Produkt der Stufe (a) mit einem Veresterungslösungsmittel gemischt und die erhaltene Mischung erwärmt wird zur Bildung eines veresterten N-substituierten Monoimids und

(c) ein Diamin mit dem Produkt der Stufe (b) gemischt wird, um eine Zusammensetzug, die beim Erwärmen ein Polyimid bildet, zu ergeben.

2. Verfahren nach Anspruch 1, worin das aliphatische Dianhydrid in der Stufe (a) weggelassen wird und nach der Stufe (b) zugegeben wird, wobei die erhaltene Mischung vor der Stufe (c) weiter erwärmt wird.

3. Verfahren nach Anspruch 1 oder 2, worin das Veresterungslösungsmittel ein Alkohol mit 1 bis 6 Kohlenstoffatomen ist.

4. Verfahren nach einem der Ansprüche 1 bis 3, worin das aromatische Dianhydrid 3,3',4,4'-Benzophenontetracarbonsäuredianhydrid und/oder Pyromellitsäuredianhydrid ist.

5. Verfahren nach einem der Ansprüche 1 bis 4, worin das aliphatische Dianhydrid 1,2,3,4-Butantetracarbonsäuredianhydrid ist.

6. Verfahren nach einem der Ansprüche 1 bis 5, worin das Lactam die Formel

$$\overline{H_2C-(CH_2)_x-NHC} = O$$

besitzt, worin x 1 bis 5 ist.

7. Verfahren nach Anspruch 6, worin das Lactam Caprolactam (x = 4) ist.

8. Verfahren nach einem der Ansprüche 1 bis 7, worin das Molverhältnis von aromatisches Dianhydrid : aliphatisches Dianhydrid : Lactam : Alkohol 0,1 bis 3,0 : 0,1 bis 3,0 : 1,0 : 10 bis 20 ist.

9. Verfahren nach einem der Ansprüche 1 bis 8, worin das Molverhältnis von aromatisches Dianhydrid : aliphatisches Dianhydrid : Lactam etwa 1 : 1 : 1 ist.

10. Verfahren nach einem der Ansprüche 1 bis 9, worin das Molverhältnis von Dianhydriden : Diamin etwa 1 : 1 ist.

11. Verfahren nach einem der Ansprüche 1 bis 10, worin das Diamin Methylendianilin und/oder 4,4'-Diaminodiphenylether ist.

12. Verfahren nach einem der Ansprüche 1 bis 11, das als zusätzliche Stufe die Zugabe von 0,01 bis 2 Gew.-% eines oberflächenaktiven Mittels zu der Zusammensetzung aus der Stufe (c) umfaßt.

13. Verfahren zum Miteinanderverbinden zweier Oberflächen, bei dem ein polyimidbildendes Harz, hergestellt nach dem Verfahren gemäß einem der Ansprüche 1 bis 12, auf wenigstens eine der Oberflächen aufgebracht wird, die zwei Oberflächen unter einem Druck von 2 bis 5 psig (13,8 bis 34,5 kPa) bei einer Temperatur von 230 bis 320°C über einen Zeitraum von 10 bis 60 min zusammengepreßt werden und die Oberflächen über einen weiteren Zeitraum von 60 bis 320 min, mit oder ohne fortgesetzten Druck, zusamengehalten werden, um die zwei Oberflächen zusammenzubinden.

14. Verfahren nach Anspruch 13, worin das polyimidbildende Harz vor oder nach seiner Aufbringung auf wenigstens eine der Oberflächen teilweise getrocknet wird.

15. Verfahren nach Anspruch 13 oder 14, worin wenigstens eine der Oberflächen eine hochfeste poröse Bahn aus gewebten oder verfilzten Fasern ist, welche mit dem polyimidbildenden Harz voll imprägniert ist.

16. Verfahren zur Herstellung einer Verbundstruktur, bei dem Metall-, keramische oder synthetische Harzmakrokügelchen mit einem mittleren Durchmesser von 0,1 bis 10 mm mit einem polyimidbildenden Harz, hergestellt durch das Verfahren gemäß einem der Ansprüche 1 bis 11, gemischt werden, die Mischung bei einer Temperatur von 60 bis 100°C über einen Zeitraum von 30 bis 240 min erwärmt wird, um den größten Teil des Lösungmittels zu verdampfen, und die Mischung bei einer Temperatur von 230 bis 320°C ausgehärtet wird, um die Verbundstruktur zu ergeben.

17. Verfahren zur Herstellung einer Verbundstruktur, bei dem wenigstens zwei poröse Bahnen aus gewebten oder verfilzten Fasern mit einem polyimidbildenden Harz, hergestellt durch das Verfahren gemäß einem der Ansprüche 1 bis 12, imprägniert werden, die imprägnierten Bahnen in eine Form gegeben werden und ein Druck von 20 bis 100 psig (137,9 bis 689,5 kPa) bei einer Temperatur von 230 bis 320°C über einen Zeitraum von 30 bis 120 min angewandt wird, um eine Verbundstruktur zu ergeben.

18. Verfahren zur Bildung einer Beschichtung auf der Oberfläche eines Substrats, bei dem ein polyimidbildendes Harz, hergestellt durch das Verfahren gemäß einem der Ansprüche 1 bis 12, auf die Oberfläche eines Substrats aufgebracht und das beschichtete Substrat erwärmt wird, um eine Haftbeschichtung zu bilden.

**Revendications**

1. Procédé pour la fabrication d'une résine formant un polyimide qui consiste

(a) à mélanger un lactame, un dianhydride aromatique et un dianhydride aliphatique, le rapport molaire lactame : dianhydride aromatique étant dans la gamme de 0,01 : 1 à 3 : 1, pour former des monoimides N-substitués,

(b) à mélanger le produit de l'étape (a) avec un solvant estérifiant et à chauffer le mélange résultant pour former un monoimide N-substitué estérifié, et

(c) à mélanger une diamine avec le produit de l'étape (b) pour donner une composition qui forme par chauffage un polyimide.

2. Procédé selon la revendication 1, dans lequel le dianhydride aliphatique est supprimé de l'étape (a) et ajouté après l'étape (b), le mélange résultant étant encore chauffé avant l'étape (c).

3. Procédé selon la revendication 1 ou 2, dans lequel le solvant estérifiant est un alcool en $C_1$—$C_6$.

4. Procédé selon l'une quelconque des revendications 1 à 3, dans lequel le dianhydride aromatique est le dianhydride d'acide 3,3',4,4'-benzophénonetétracarboxylique et/ou le dianhydride pyromellitique.

5. Procédé selon l'une quelconque des revendications 1 à 4, dans lequel le dianhydride aliphatique est le dianhydride d'acide 1,2,3,4,-butanetétracarboxylique.

6. Procédé selon l'une quelconque des revendications 1 à 5, dans lequel le lactame répond à la formule

$$H_2C—(CH_2)_x—NHC=0$$

dans laquelle x est de 1 à 5.

7. Procédé selon la revendication 6, dans lequel le lactame est le caprolactame (x = 4).

8. Procédé selon l'une quelconque des revendications 1 à 7, dans lequel la proportion dianhydride aromatique : dianhydride aliphatique : lactame : alcool est de 0,1 à 3,0 : 0,1 à 3,0 : 1,0 : 10 à 20.

9. Procédé selon l'une quelconque des revendications 1 à 8, dans lequel la proportion molaire dianhydride aromatique : dianhydride aliphatique : lactame est d'environ 1 : 1 : 1.

10. Procédé selon l'une quelconque des revendications 1 à 9, dans lequel le rapport des dianhydrides à la diamine est d'environ 1 : 1.

11. Procédé selon l'une quelconque des revendications 1 à 10, dans lequel la diamine est la méthlyènedianiline et/ou l'éther 4,4'-diaminodiphénylique.

12. Procédé selon l'une quelconque des revendications 1 à 11, qui comprend l'étape supplémentaire d'addition de 0,01 à 2% en poids d'un tensioactif à la composition provenant de l'étape (c).

13. Procédé pour coller ensemble deux surfaces, qui consiste à appliquer sur l'une au moins des surfaces une résine formant un polyimide fabriquée par le procédé selon l'une quelconque des revendications 1 à 12, à presser ensemble les deux surfaces sous une pression de 2 à 5 psig (13,8 à 34,5 kPa) à une température de 230 à 320°C pendant une durée de 10 à 60 min et à maintenir les surfaces ensemble pendant une durée supplémentaire de 60 à 320 min, avec ou sans maintien de la pression pour coller ensemble les deux surfaces.

14. Procédé selon la revendication 13, dans lequel la résine formant un polyimide est partiellement séchée avant ou après son application sur l'une au moins des surfaces.

15. Procédé selon la revendication 13 ou 14, dans lequel l'une au moins des surfaces est une feuille poreuse de fibres tissées ou en nappes, de résistance élevée, qui est totalement imprégnée avec la résine formant un polyimide.

16. Procédé pour fabriquer une structure composite qui consiste à mélanger des macroballoons de métal, de céramique ou de résine synthétique ayant un diamètre moyen de 0,1 à 10 mm avec une résine formant un polyimide fabriquée par le procédé selon l'une quelconque des revendications 1 à 11, à chauffer le mélange à une température de 60 à 100°C pendant une durée de 30 à 240 min pour évaporer la majeure partie du solvant, et à durcir le mélange à une température de 230 à 320°C pour donner la structure composite.

17. Procédé pour fabriquer une structure composite, qui consiste à imprégner au moins deux feuilles poreuses de fibres tissées ou en nappes avec une résine formant un polyimide fabriquée par le procédé selon l'une quelconque des revendications 1 à 12, à placer les feuilles imprégnées dans un moule et à appliquer une pression de 20 à 100 psig (137,9 à 689,5 kPa) à une température de 230 à 320°C pendant une durée de 30 à 120 min pour donner la structure composite.

18. Procédé de formation d'un revêtement sur la surface d'un support, dans lequel on applique sur la surface d'un support une résine formant un polyimide fabriquée par le procédé selon l'une quelconque des revendications 1 à 12 et on chauffe le support revêtu pour former un revêtement adhérent.